# EUROPEAN PATENT APPLICATION

(11) **EP 0 786 748 A2**
(43) Date of publication of application: **30.07.1997**
(21) Application number: 97200170.5
(22) Date of filing: 22.01.1997
(51) Int. Cl.: G07F 11/02, G07F 11/58, B65G 1/137, A47F 1/10, G07G 1/00

(54) **Products dispensing system**

(30) Priority: 23.01.1996 ES 9600143
(71) Applicant: Jofemar I Mas D.S.L., 31350 Peralta (Navarra) (ES)
(72) Inventor: Guindulain Vidondo, Félix, 31350 Peralta, Navarra (ES)
(74) Representative: Ungria Lopez, Javier

(57) **Abstract**

Product dispensing system preferably to be used to dispense packs of cigarettes, and whose dispensing system comprises a storage machine (1) of the different products provided with means to supply the products to their destination, product conveyance means, means to convey products to the destination, intermediate means of storage and display of the products, as well as means to control the same, and means to request the products from the different selling spots.

## Description

### OBJECT OF THE INVENTION

As it is expressed in the title of the present specification, the following invention consists of a product dispensing system, which is to be mainly used for the automatic dispensing of packs of cigarettes, so that its installation in large self-service stores, makes it possible to have different spots where the products stored in a single machine are sold and received.

In this way, it is possible with a single product storage and dispensing machine to feed different selling spots, with which there may be a larger variety of products, and at the same time a smaller number of totally stored products.

On the other hand, upon having automatic control of all the sales made with all types of details, there is a perfect control of sales, avoiding losses, since when the order to dispense one or several products from a selling spot is given, the system will control when the order has been given in order to know who was positioned at that selling spot.

### FIELD OF APPLICATION

The product dispensing system that is described in the present specification is to be used to dispense and sell packs of cigarettes, in such a way that the system can be installed, preferably, in large self-service stores, allowing the cashiers of the establishment to have a terminal from which the different products requested by the customer may be requested so that the same may be delivered, either from a secondary dispenser close to the cashier's box, or from a machine that acts as a general warehouse, containing a large amount of diverse products.

### BACKGROUND OF THE INVENTION

Conventionally, cigarettes have been marketed in tobacconist's shops along with a series of other products, but with the passing of time, in order to facilitate the purchase of cigarettes by consumers, the same began to be sold by coin-operated automatic vending machines, in such a way that with technological advancements, numerous changes were introduced in said vending machines. Practically they do not resemble at all the electronic mechanisms of present-day vending machines, based on mechanical devices.

Said automatic cigarette vending machines may be of different sizes, but normally they cannot be very large since the same are to be installed in shops that are not usually very big, therefore, the same must adapt to said surfaces.

Hence, the automatic cigarette vending machines have a series of storage compartments of the packs of cigarettes of the brands that are sold the most, given that they do not have a capacity capable of storing a large variety of brands.

In this way, in large stores, when it has been decided to sell cigarettes, the solution has been to install a tobacconist's stand attended to by the corresponding personnel, but in those smaller shops that generally only have one cashier's box, the selling of cigarettes is done by the cashier himself and this solution has the inconvenience that since there is very little space, the variety of cigarettes is small and the control of sales is very difficult to carry out.

On the other hand, if this solution is passed on to large stores, so that the cashiers themselves may dispense cigarettes, there are numerous inconveniences, such as the need of a large stock so that all the selling spots have enough cigarettes, the difficult control of sales, the time required to replace sold products, etc.

### DESCRIPTION OF THE INVENTION

The present specification describes a product dispensing system, which is to be preferably installed in large stores for the selling of packs of cigarettes, in such a way that the system comprises a storage machine of the different products, provided with means to supply the products to their destination, in such a way that said central storage machine has a compartment, and it will be connected to the different selling spots by means of a conveyor duct of the products to the selling spots.

Said central storage machine has a general prismatic rectangular shape and has a pair of lateral alignments, wherein the storage compartments of each one of the varieties or brands of product are defined, having underneath a unitary and automatic product remover, through which the product is expelled to a longitudinal central recess hermetically sealable at the top by means of a plate operated by a pair of cylinders.

The central storage machine has at the side a compartment, wherein some air producing means and a compressor are located, in such a way that at the center of the bottom said compartment is connected to the central longitudinal bottom recess of the machine, the connecting mouth being able to be open or sealed by a strip operated by a cylinder, in such a way that when said mouth remains open the passing of pressurized air causes the movement and conveyance of the product to the destination, that is to say the selling spot, for which purpose opposite said inlet mouth of air to the bottom recess of the machine, there is an outlet, which the means to convey the product towards the selling spots, discharge into.

In this way, with a single central warehouse, that may be considerably large and may have a large variety and amount of products, different selling spots are fed, in such a way that when a product is requested from a selling spot, the corresponding unitary automatic remover is actuated to expel the bottom pack towards the central longitudinal recess actuating the pair of cylinders that will lower the center plate sealing said recess and upon sending the pressurized air that actuates as a conveyor means from the contiguous compartment, the product is conveyed to the selling spot, from where it has been requested.

The means that convey the products from the central storage machine to the destination, are made by a main modular duct from which the different secondary ducts that lead to the receiving box of the product, or to a rotating cylindrical body that acts as an intermediate display-warehouse and from which the product may also be expelled to the receiving box.

For the perfect conveyance of the products, certain sections or modules of the general duct, are operated by a cylinder that causes diversion thereof discharging them to the corresponding secondary module duct.

Once the product is located in the secondary modular duct, the same may go directly to the receiving box or else it may be taken to some intermediate storage and display means, defined by a cylindrical body rotating at two speeds that is preferably comprised of twelve stacked double compartments.

Said intermediate cylindrical body that acts as a warehouse and display of a series of products, is provided with a display rotating speed and a greater rotating speed for the product removal operation, whereby said operation is facilitated when the product to be removed is to be positioned upon the automatic unitary product remover that the cylindrical body has opposite the conveyor of the products towards the receiving box.

On the other hand, said intermediate cylindrical display and storage body has a pair of position detectors to control the position of the products contained therein, as well as a pair of product detectors in both overlying stacks. Besides at the outlet of the product from said intermediate body, the product through duct has a sale detector that controls the dispensing of the sold product.

In order to request products, the system has some means that are defined by a panel with a set of pushbuttons that corresponds with the different products and the electronics of each one of them controls all the operations for removal, conveyance and selling of the product, knowing at each moment the number of products sold, who has sold them and when and the amount sold of each one of the products.

The intermediate warehouse-display, placed in each one of the selling spots, will normally have the products that are sold the most, in such a way that when a product is requested, if the same is located in said warehouse-display, it will be dispensed from the warehouse-display, and if there are no products of said brand therein, the product will be dispensed from the central warehouse.

On the other hand, when a product is dispensed from the intermediate warehouse-display the same is automatically replaced from the central warehouse.

By means of the described system, storage of a large amount of brands and products is facilitated, given that from the same a large number of selling spots are fed, which,despite this, causes the stock to be much smaller, than if each one of the selling points, acts independently taking into account the large variety and amount of products in stock.

In order to complete the description that is going to be made hereinafter and for the purpose of providing a better understanding of the features of this invention, the present specification is accompanied by a set of drawings, in whose figures, the most significant details of the invention, described in the present specification, are represented in an illustrative and non-restrictive manner.

### BRIEF DESCRIPTION OF THE DRAWINGS

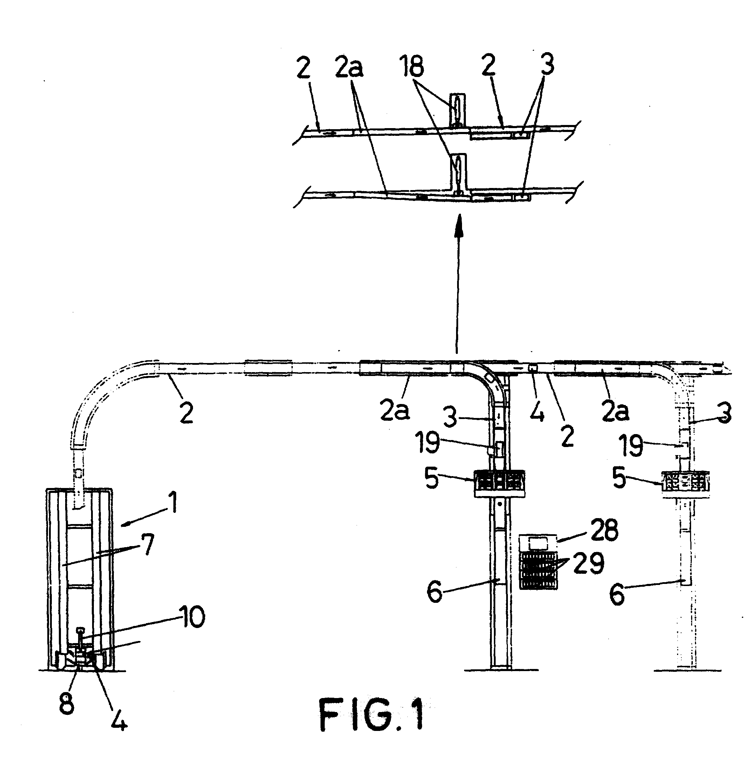

Figure 1 shows a view of the installation of the product dispensing system, allowing one to see the storage machine with the main duct, and two secondary ducts provided with the corresponding intermediate cylindrical storage and display body, as well as a detail of the way of diversion of the products from the main duct to the secondary duct upon the corresponding cylinder actuating.

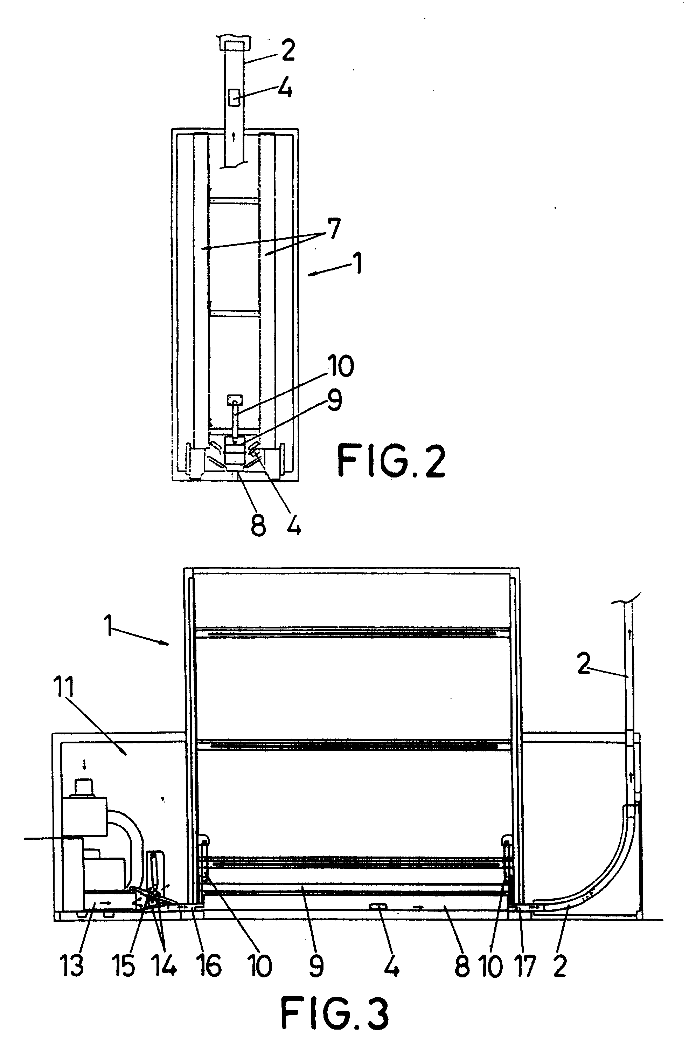

Figure 2 shows a raised side view of the central storage machine wherein the two side product compartments, as well as the bottom closing mechanism of the longitudinal bottom central recess which the dispensed products discharge into and which is sealed at the top to allow the conveyance of products by the pressurized air that penetrates in it, are observed.

Figure 3 shows a raised front view of the central storage machine wherein one can observe the side compartment with the air producing mechanism for the conveyance of the products, as well as the way of sealing and opening the mouth for the flow of air towards the bottom central recess of the machine with a pack of cigarettes in it and with the top cover raised.

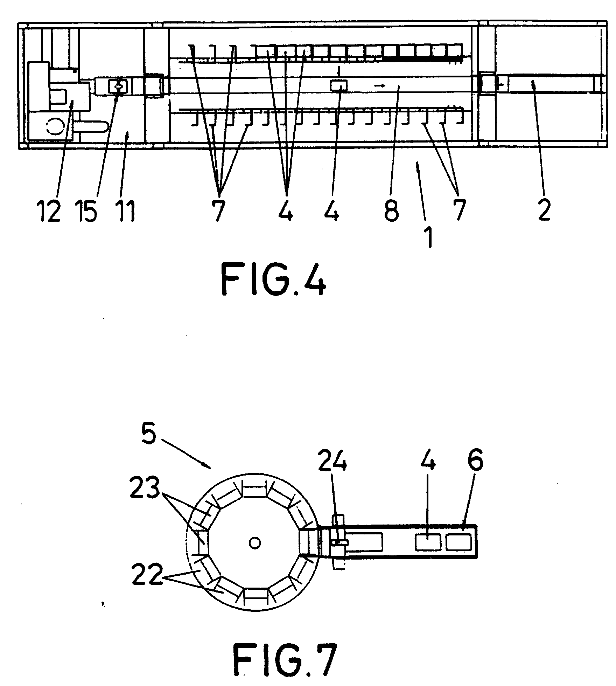

Figure 4 shows a plan view of the central storage machine wherein one can see the abutted side compartments defined by U-shaped sections, as well as the bottom central recess with a pack of cigarettes contained therein.

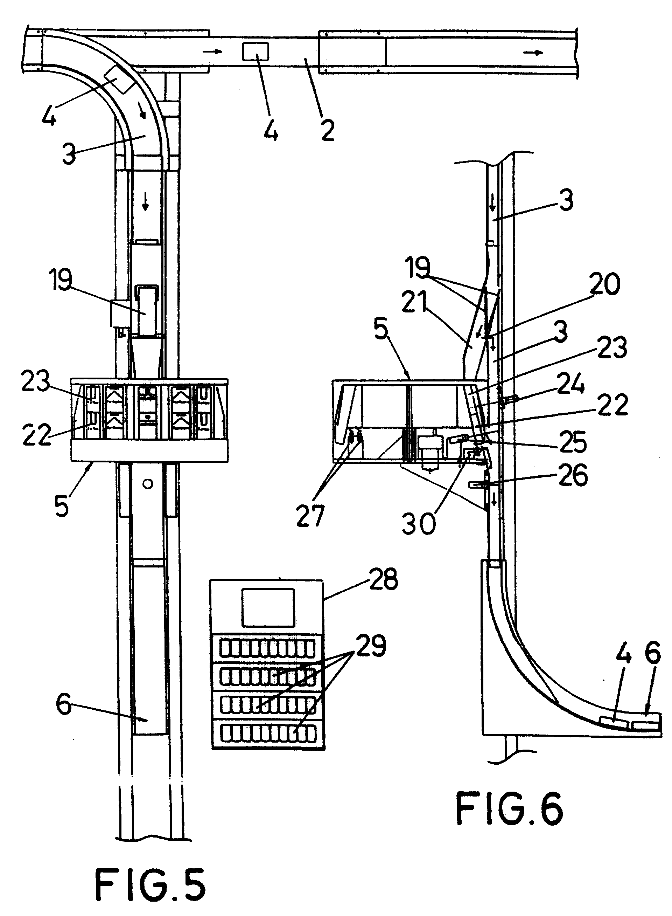

Figure 5 shows a front view of a secondary product conveyor duct, wherein one can see the intermediate rotating cylindrical storage-display body, which preferably has twelve double compartments, as well as the product request control push-button panel placed in the site of the person who controls the same.

Figure 6 shows a raised side view of the secondary duct of the previous figure, wherein one can see the gate that conveys the packs of cigarettes toward the intermediate display warehouse or towards the receiving box, as well as the rotating cylindrical display and body wherein one sees the two magnetic position detectors, as well as the product presence detectors in both stacked rows and with the bottom control detector of the sale made.

Figure 7 shows a plan view of the rotating cylindrical body that acts as the intermediate warehouse and display of the products contained in it, as well as the duct that discharges into the product receiving box.

### DESCRIPTION OF A PREFERRED EMBODIMENT

In view of the cited figures and in accordance with the numbering used, we can see how the product dispensing system is to be used preferably for its installation in large stores to dispense packs of cigarettes and the same comprises a storage machine (1) of the different products, the machine remaining connected to the different selling points by means of a main modular duct (2) and a series of secondary ducts (3), also modular, that originate in the main duct (2), conveying the products (4) through them, towards an intermediate cylindrical body (5), that acts as a warehouse and display or towards the receiving box (6).

The machine (1) has a pair of parallel side alignments, to which the compartments that house the different types or brands of products (5) are abutted and which are defined basically by a generally U-shaped section (7), inside which the stacked products (4) are housed.

Underneath each one of the compartments in which the products (4) are housed, there is an automatic unitary remover, which upon being activated expels the bottom pack of cigarettes towards the longitudinal central recess (8) which can be sealed at the top by means of a strip (9) operated by a pair of cylinders (10) that carries out an airtight sealing.

On the side the machine (1) has a compartment (11) wherein a three-phase motor (12) with some blades that produce an air current that goes out through the duct (13) is housed. It is possible to direct said air current towards the top part of the compartment or towards a mouth (16)connecting with the longitudinal central bottom recess (8) of the machine (1), by a strip (14) operated by a cylinder (15). Likewise, the compartment (1) may also have a compressor that will serve to operate the different cylinders of the system.

On the other hand, the machine (1) on the side opposite the mouth (16) through which the air penetrates to the recess (8), has an outlet mouth (17) of the product (4), through the main modular duct (2) that will be conveyed by the air introduced through the recess (8).

The products (4) dispensed in the central machine (1) are conveyed through the main modular duct (2) towards the different selling spots, for which purpose the system has some secondary ducts (3), also modular, to which the products (4) are diverted through the respective rotating modules (2a) that divert the product towards the secondary duct (3), said modules (2a) being operated by respective cylinders (18).

Once the corresponding product is placed in the respective secondary duct (3), it will be directed towards the rotating intermediate body (5) that acts as a warehouse-display, or to the receiving box (6) in such a way that in the corresponding ducts (3) a lever (19) rotating with respect to the shaft (20)has been placed.

Hence, if the lever (19) is placed upon one of the walls of the duct (3), the product drops through said secondary modular duct (3) towards the receiving box (6), and if on the contrary the lever (19) is crossed over the secondary duct (3), the product is diverted through the duct (21) towards the intermediate rotating body (5).

The cited intermediate rotating body (5) preferably has twelve double compartments, the products remaining as two stacks (22) and (23) and the pair of products stacked being of the same variety or brand, in such a way that the body (5)acts as a display of the different products and as a warehouse.

When a customer requests a product, the cashier requests the same by means of the set of pushbuttons (29) of the corresponding panel (28) placed at her disposal and that includes all the control electronics, in such a way that if the requested product is one of those that is not located in the intermediate body (5), it is sent from the central machine (1), and if the requested product is one of those that is displayed in the intermediate body (5), it is supplied from the latter to the receiving box (6).

In this way, when the cashier requests a product and it should be supplied from the central machine (1), one of the requested products is expelled through the corresponding automatic unitary remover, placed under the stack of stacked products towards the box (8), the same closing upon the cylinders (10) actuating and the plate (9) dropping in order to hermetically seal said recess (8), in such a way that the air produced by the three-phase motor (12) and the corresponding blades is directed by the strip (14) towards the mouth (16), impelling the air to the product (4) contained in the recess (8) directly towards the receiving box (6), upon being conveyed through the duct (2) and the secondary diversion duct (3) that corresponds with the request spot.

If on the contrary when a product is requested from the corresponding keyboard or set of pushbuttons (29) of the panel (28) that is located in the intermediate rotating body (5), the same is positioned with the product to be dispensed upon the unitary remover (30), the product being expelled from the corresponding bottom compartment (22) in such a way that the product positioned in the top compartment (23) falls towards the bottom compartment (22) that has remained empty.

In this way, upon the detector (24) verifying the lack of a product in the corresponding compartment (23) that has remained empty, the system is activated so that from the central machine, the corresponding product is sent towards the empty compartment (23).

To expedite the dispensing operation, the body (5) has a rotating display speed and a faster positioning speed, from the moment when a product is requested, for adequate positioning as rapidly as possible for the removal of the requested product.

On the other hand, under the body (5) there is a detector (26) to control that a sale has been made, since all the products (4) dispensed must go by it in their path towards the receiving box (6).

Likewise, the intermediate body (5) that acts as a display and warehouse has a pair of position detectors (27) that control all of the movements for the adequate positioning and control of said body. Besides, the detectors (24) and (25) detect the presence of a product in both overlying compartments (23) and (22).

In short, we can conclude by emphasizing the fact that upon having a single product warehouse, for a variable number of selling spots (for example 10), it is possible to have a large variety and amount of products, with a reduced stock, while if each selling spot must have its corresponding warehouse, there must be a large stock of products. This is so, since if each selling spot must have a large variety or brands of products, the stock must be very large, above all of the products or brands that sell the least.

With the new system, a less considerable amount of these brands that have a smaller demand may be had, since different selling spots are supplied with the same, in such a way that with said amount sales will be made in a prudential period of time, whatever the selling spot is, without the storage time thereof being too long, which can affect the quality of the product. In short, a general smaller stock of products is needed and at the same time there is no shortage of stocks.

Given that only one warehouse, that is to say the central machine, needs to be restocked, very little time is put into said operation, while if, for example 10 warehouses have to be restocked, the time spent is much longer, with the added inconvenience that said restocking must be done by a third person since the different cashiers at the selling spots, can never leave their work to carry out said operation.

The presence of intermediate display warehouses allows for the display of the desired products and quicker service.

## Claims

1. Product dispensing system, which is preferably used to dispense packs of cigarettes, characterized in that the dispensing system comprises a storage machine (1) of the distinct products which is provided with means to supply the products to their destination, means to convey the products, means to channel the products towards the destination, intermediate product storage and display means, as well as means to control the same and means to request the products from the different selling spots.

2. Product dispensing system, in accordance with claim 1, characterized in that the storage machine (1) has a pair of side alignments of compartments (7) in which the different brands of goods (4) are stored under which the corresponding unitary remover remains.

3. Product dispensing system, in accordance with claims 1 and 2, characterized in that the storage compartments (7) of the different brands of products (4) are defined by generally U-shaped sections between which the products remain stacked.

4. Product dispensing system, in accordance with claim 1, characterized in that the bottom central part of the product storage machine (1) is defined by a longitudinal recess (8) upon which the products (4) expelled from their different storage departments fall.

5. Product dispensing system, in accordance with claims 1 and 4, characterized in that the product (4) storage machine (1) has on the side a compartment (11) which houses an air producing mechanism defined by a three-phase motor and the corresponding blades, that acts as a product conveyance means, and a compressor, in such a way that said compartment (11) remains connected at the bottom and in the central with the central longitudinal recess (8) wherein the products expelled from the storage compartments (7) are deposited.

6. Product dispensing system, in accordance with claims 1, 4 and 5, characterized in that the longitudinal central bottom recess (8) of the product (4) storage machine (1) is capable of being sealed at the top, by means of a plate (9) operated laterally by a pair of cylinders (10).

7. Product dispensing system, in accordance with claims 1, 4 and 5, characterized in that the connecting mouth (16) of the compartment (11) that houses the air producing mechanism and the compressor is capable of being sealed by a strip (14) operated by a cylinder (15).

8. Product dispensing system, in accordance with claim 1, characterized in that the means to channel the products (4) towards the destination are formed by a main tube-shaped duct that originates in the bottom side of the storage machine (1) opposite the side when the air penetrates and whose duct (2) is defined by a series of sections or modules connected together.

9. Product dispensing system, in accordance with claims 1 and 8, characterized in that the secondary ducts (3) that discharge into the selling spots originate from the main tube-shaped duct (2).

10. Product dispensing system, in accordance with claims 1, 8 and 9, characterized in that the main tube-shaped product conveyance duct (2) is urged, in the sections of connection with the secondary ducts (3) that discharge into the dispensing spots, by corresponding cylinders (18) that divert the product towards the secondary duct (3).

11. Product dispensing system, in accordance with claim 1, characterized in that the intermediate storage and display means are defined by a rotating cylindrical body (5) that preferably has twelve double compartments, the same being located in each one of the secondary ducts that discharge into the receiving boxes (6).

12. Product dispensing system, in accordance with claims 1 and 11, characterized in that the secondary ducts have a gate (19) rotating in respect to the shaft (20), that channels the product towards the intermediate warehouse-display (5) or towards the receiving box (6).

13. Product dispensing system, in accordance with claims 1 and 11, characterized in that the intermediate cylindrical storage and display body (5) has a display speed and another faster dispensing speed in order to expedite said operation.

14. Product dispensing system, in accordance with claims 1 and 11, characterized in that the intermediate cylindrical storage and display bodies (5) have a pair of position detectors (27).

15. Product dispensing system, in accordance with claims 1 and 11, characterized in that the intermediate cylindrical storage and display bodies (5) have, for each one of the supply stacks (23) and (22) of the product, a detector (24) and (25), respectively, of presence of the same.

16. Product dispensing system, in accordance with claims 1 and 11, characterized in that the intermediate cylindrical storage and display bodies (5) have a product remover (30), placed in relation to the secondary duct (3) for expulsion thereof towards the receiving box (6), in whose duct it faces a detector (26) of the sale made.

17. Product dispensing system, in accordance with claim 1, characterized in that the means to request the sale of products existing in each one of the selling spots are defined by a push-button type control panel (28), that automatically controls all the operations for the dispensing, conveyance and selling of the product.

18. Product dispensing system, in accordance with claims 1 and 17, characterized in that when the request of the product is made, the supplying of the same is preferably done from the intermediate cylindrical storage and display body (5), and in the event there is no product therein, the supplying is done directly from the storage machine (1).

19. Product dispensing system, in accordance with claims 1 and 18, characterized in that the expulsion of a product from the intermediate storage and display body (5) causes the immediate replacement of the same, from the storage machine (1).
